# EUROPÄISCHE PATENTSCHRIFT

(11) **EP 0 751 315 B1**
(45) Veröffentlichungstag und Bekanntmachung des Hinweises auf die Patenterteilung: **12.08.1998**
(21) Anmeldenummer: 96105533.2
(22) Anmeldetag: 09.04.1996
(51) Int. Cl.: F16D 25/12

(54) **Hydropneumatischer Kupplungskraftverstärker, insbesondere für Kraftfahrzeuge**
Hydropneumatic clutch servo, especially for motor vehicles
Servo-moteur hydropneumatique, notamment pour véhicules automobiles

(30) Priorität: 27.06.1995 DE 19522966
(43) Veröffentlichungstag der Anmeldung: 02.01.1997
(73) Patentinhaber: KNORR-BREMSE Systeme für Nutzfahrzeuge GmbH, 80809 München (DE)
(72) Erfinder: Melcher, Gernot, 80796 München (DE); Knaust, Holger, 85221 Dachau (DE)

(56) Entgegenhaltungen:
- EP-A- 0 068 495
- EP-A- 0 081 707

## Beschreibung

Die Erfindung betrifft einen hydropneumatischen Kupplungskraftverstärker gemäß Gattungsbegriff des Patentanspruches 1.

Kupplungskraftverstärker der gattungsgemäßen Art (DE-PS 37 09 166) weisen an ihrem Gehäuse ein vorzugsweise baulich integriertes Steuerteil in Form eines Steuerventils auf, welches bei hydraulischer Beaufschlagung durch Fußpedalkraft über einen Steuerkolben auf ein pneumatisches Einlaß- und Auslaßventil für die Druckluftbeaufschlagung des pneumatischen Servokolbens einwirkt. Kupplungskraftverstärker dieser Art haben also die Aufgabe, insbesondere bei Lastkraftwagen und Omnibussen, die Fußpedalkraft mittels Druckluft über einen Servokolben proportional zu verstärken.

Werden bei Rücknahme der Fußpedalkraft über den auf die Kupplung einwirkenden Stößel seitens des Kupplungs- oder Antriebssystems axiale Schwingungen in den Verstärker eingeleitet, kann es im Steuerteil zu einem axialen Schwingen des Proportionalventils, d.h. des Einlaß- und Auslaßventils für den pneumatischen Servoteil, führen. Dieses Schwingen äußert sich am Kupplungsfußpedal durch ein hochfrequentes Vibrieren bzw. durch ein ,,schnatterndes" Ablaßgeräusch am Kupplungskraftverstärker, da das Einlaß- und Auslaßventil unter Einwirkung des schwingenden Steuerkolbens kurzfristig öffnet und schließt.

Die Aufgabe der vorliegenden Erfindung besteht darin, einen Kupplungskraftverstärker der in Rede stehenden Art so auszugestalten, daß nachteilige Schwingungen der genannten Art ausgeschaltet werden.

Zur Lösung dieser Aufgabe dienen die Merkmale nach dem Kennzeichnungsteil des Patentanspruches 1 bzw. des Patentanspruches 2.

Durch den in jeder Betriebsstellung des Steuerkolbens erfolgten gegenseitigen Eingriff von Zapfen und Bohrung im Deckel bzw. Steuerkolben erfolgt wechselweise ein Befüllen bzw. Entleeren des sich im Steuerkolben vergrößernden und verkleinernden Volumens, was zu einem Dämpfungsverhalten des Steuerkolbens bei höherfrequenter Schwingungsanregung beiträgt. Dies ist im besonderen vorteilhaft bei Rücknahme der Pedalkraft, also beim Entkuppeln. Als Resultat tritt kein hochfrequentes Vibrieren des Kupplungsfußpedals bzw. kein ,,schnatterndes" Ablaßgeräusch am Kupplungskraftverstärker auf.

Dieselbe Wirkung wird erreicht, wenn die Positionen von Zapfen und Bohrung vertauscht sind, wenn sich also der Zapfen am Steuerkolben und die Bohrung im Deckel befindet.

Die Erfindung ist nachfolgend anhand von Ausführungsbeispielen unter Bezugnahme auf die beigefügte Zeichnung erläutert.
Figur 1 ist eine schematische Ansicht des Kupplungskraftverstärkers in seiner Zuordnung zum Geberzylinder und zur Kupplung;
Figur 2 ist eine vergrößerte Teilschnittansicht des Steuerventils des in Figur 1 dargestellten Kupplungskraftverstärkers, wobei in der oberen Schnitthälfte die betätigte Position des Steuerkolbens wiedergegeben ist, während in der unteren Schnitthälfte nach Figur 2 die zurückgeführte Position des Steuerkolbens dargestellt ist, in welcher das Volumen zwischen Zapfen und Bohrung auf ein Mindestmaß reduziert ist.

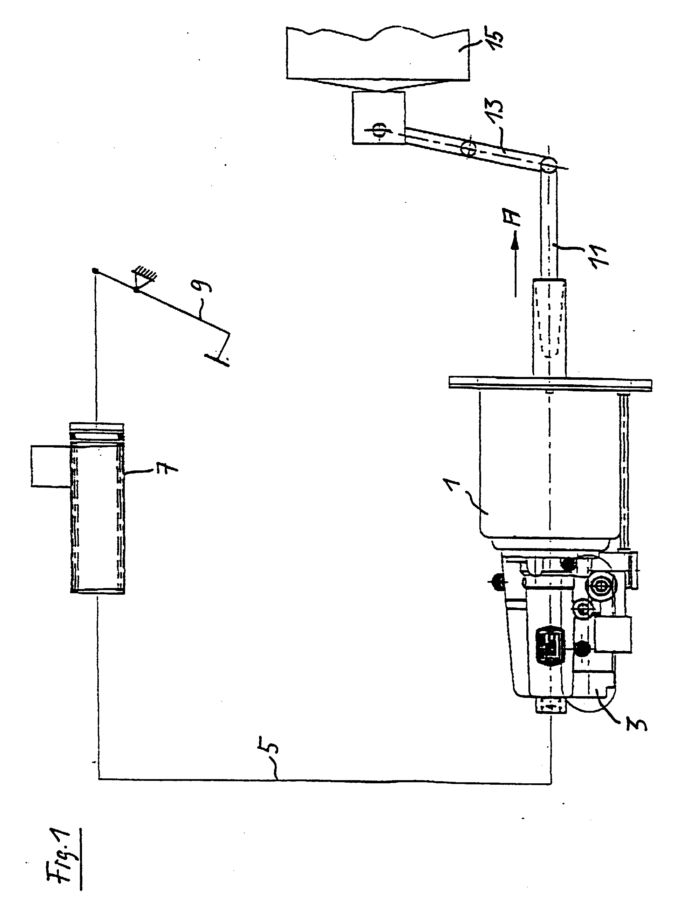

In Figur 1 der Zeichnung ist ein hydropneumatischer Kupplungskraftverstärker 1 mit einem an ihm baulich integrierten Steuerventil 3 dargestellt. Das Steuerventil 3 ist mittels einer ein hydraulisches Medium führenden Leitung 5 an einen Geberzylinder 7 von hydraulischer Wirkungsweise angegeschlossen. Der Geberzylinder ist in an sich bekannter Weise mittels eines Kupplungspedals 9 betätigbar.

Im Inneren des Kupplungskraftverstärkers 1 sind ein hydraulisch betätigbarer Arbeitskolben und ein pneumatisch betätigbarer Servo- bzw. Arbeitskolben (nicht dargestellt) angeordnet, wobei der pneumatisch wirkende Arbeitskolben auf einen Stößel 11 einzuwirken vermag, derart, daß bei Verschiebung des Stößels 11 in Pfeilrichtung A unter Schwenkung des an ihm angelenkten Hebels 13 ein Ausrücken der Kupplung 15 erfolgt. Das Einrücken der Kupplung entsprechend Druckentlastung der im Kupplungskraftverstärker 1 befindlichen Arbeitskolben erfolgt bei gemäß Figur 1 nach links gerichteter, unter Federrückstellkraft sich vollziehender Bewegung des Stößels 11.

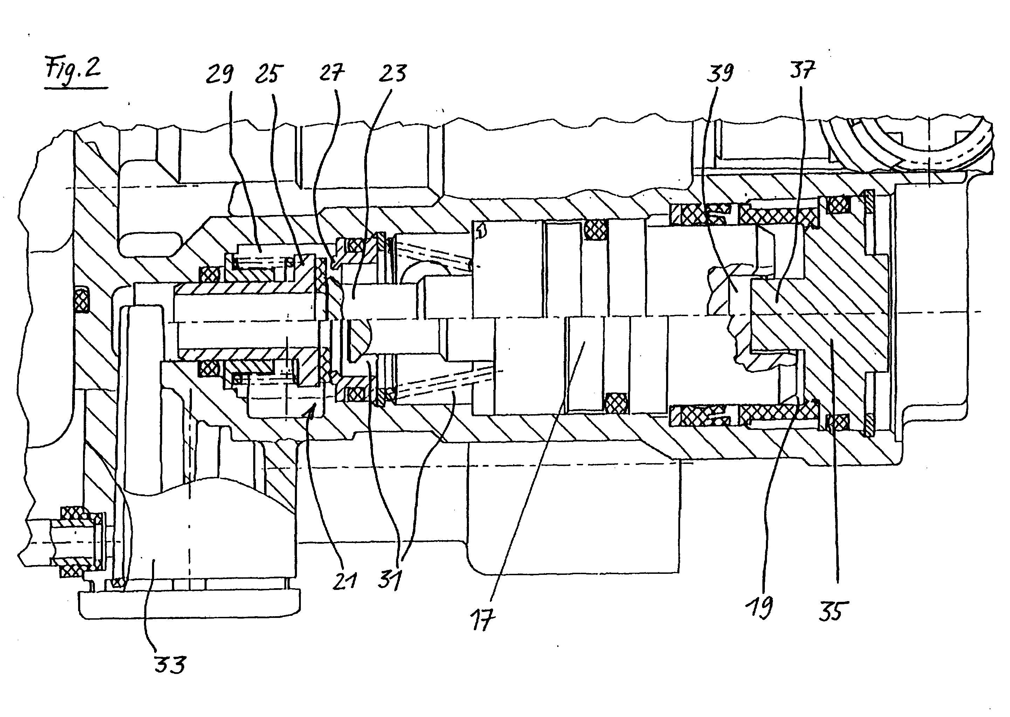

Das in vergrößerter Teilschnittansicht in Figur 2 wiedergegebene Steuerventil 3, welches bei hydraulicher Betätigung zur pneumatischen Umsetzung, d.h. zur Druckluftbeaufschlagung des pneumatischen Servo- bzw. Arbeitskolbens des Kupplungskraftverstärkers dient, ist mit einem Steuerkolben 17 versehen, welcher an seiner rechten Stirnseite durch eine Kammer 19 begrenzt ist; bei Betätigung des Kupplungspedals 9 bzw. des angeschlossenen Geberzylinders 7 wird hydraulisches Medium über die Leitung 5 in die Kammer 19 eingeleitet (bei gleichzeitiger Druckbeaufschlagung des nicht dargestellten hydraulischen Arbeitskolbens des Kupplungskraftverstärkers), derart, daß der Steuerkolben 17 gemäß Darstellung nach Figur 2 nach links gerichtet verschoben wird und auf ein Einlaß- und Auslaßventil 21 einzuwirken vermag. In der oberen Schnitthälfte nach Figur 2 ist die beaufschlagte Position des Steuerkolbens 17 dargestellt, in welcher ein an ihm vorgesehener Ventilstössel 23 einen Ventilkörper 25 von einem Ventil 27 abhebt, derart, daß eine an Druckluftvorrat angeschlossene Kammer 29 mit einer Kammer 31 in Verbindung gelangt. Letztere ist mit der pneumatisch beaufschlagbaren (nicht dargestellten) Druckkammer des pneumatischen Arbeitskolbens des Kupplungskraftverstärkers 1 verbunden, so daß bei hydraulischer Betätigung des Steuerkolbens 1 pneumatische Druckbeaufschlagung des pneumatischen Arbeitsteils des Kupplungskraftverstärkers erfolgt, wie an sich bekannt ist.

Bei Entlastung des Steuerkolbens 17 und Rückführung (mittels Federkraft) desselben in die in der unteren Schnittdarstellung nach Figur 2 wiedergegebene Lage sind die beiden Kammern 29 und 31 voneinander getrennt, derart, daß die Kammer 31 mittels der axialen Durchführung des Ventilkörpers 25 an einen zur Atmosphäre führenden Auslaß 33 angeschlossen ist. Auf die vorgenannte Weise erfolgt Entlastung des pneumatischen Teils des Kupplungskraftverstärkers und in der Folge Rückführung desselben unter Federkraft.

Gemäß der Erfindung ist der in Figur 2 am rechten Ende des Steuerventils dieses schließende Deckel 35 mit einem axial sich erstreckenden Zapfen 37 versehen, welcher in eine Bohrung 39 des Steuerkolbens 17 eintaucht; der Zapfen taucht in jeder Betriebsstellung des Steuerkolbens in diese Bohrung ein, wie die die Endlagen des Steuerkolbens wiedergebenden Schnittdarstellungen gemäß oberer und unterer Schnitthälfte nach Figur 2 veranschaulichen. Der Zapfen und die Bohrung haben ein zueinander abgestimmtes Spiel, in welchem Hydraulikflüssigkeit bei jeder Bewegung des Steuerkolbens transportiert werden muß. Dieses Befüllen bzw. Entleeren des sich bildenden Volumens im Steuerkolben führt zu einem Dämpfungsverhalten desselben bei höherfrequenter Schwingungsanregung. Als Resultat tritt kein hochfrequentes Vibrieren des Kupplungsfußpedals bzw. "schnatterndes" Ablaßgeräusch am Kupplungskraftverstärker auf, wenn die Kupplungskraft am Fußpedal zurückgenommen wird.

Die Erfindung ist nicht auf die in Figur 2 dargestellte Ausgestaltung des Zapfens und der Bohrung begrenzt, d. h. es kann an der Hydraulikseite des Steuerkolbens 17 ein Zapfen ausgebildet sein, welcher in eine entsprechende Bohrung im Deckel 35 eingreift, wobei wiederum vorgesehen ist, daß dies in jeder Betriebsstellung des Steuerkolbens geschieht, derart, daß die dämpfende Wirkung an der zwischen Außenumfang des Zapfens und Innenumfang der Bohrung existierenden Drosselstelle wechselweise erreicht wird.

### Bezugszeichenliste

- 1: Kupplungskraftverstärker
- 3: Steuerventil
- 5: Leitung
- 7: Geberzylinder
- 9: Kupplungspedal
- 11: Stößel
- 13: Hebel
- 15: Kupplung
- 17: Steuerkolben
- 19: Kammer
- 21: Einlaß- und Auslaßventil
- 23: Ventilstössel
- 25: Ventilkörper
- 27: Ventilsitz
- 29: Kammer
- 31: Kammer
- 33: Auslaß
- 35: Deckel
- 37: Zapfen
- 39: Bohrung

## Patentansprüche

1. Hydropneumatischer Kupplungskraftverstärker, insbesondere für Kraftfahrzeuge, mit in einem Gehäuse angeordneten hydraulischen und pneumatischen Arbeitskolben, welche auf einen gemeinsamen, die Kupplung betätigenden Stößel einzuwirken vermögen, wobei ein dem Kupplungskraftverstärker zugeordnetes Steuerventil einen mittels eines Geberzylinders hydraulisch ansteuerbaren Steuerkolben aufweist, der gegenüber einem pneumatischen Einlaß- und Auslaßventil für den pneumatischen Arbeitskolben des Kupplungskraftverstärkers wirkt, **gekennzeichnet** durch folgende Merkmale:
a) auf der der Hydraulikseite des Steuerkolbens (17) zugewandten Seite eines das Steuerventil (3) begrenzenden Deckels (35) ist ein Zapfen (37) ausgebildet;
b) in die dem Zapfen (37) zugewandte Seite des Steuerkolbens (17) ist eine Bohrung (39) eingebracht; und
c) die Abmessungen des Zapfens und der Bohrung sind so gehalten, daß der Zapfen (37) in jeder Betriebsstellung des Steuerkolbens (17) in die Bohrung (39) eintaucht, derart, daß zwischen Zapfen und Bohrung ein zueinander abgestimmtes Spiel besteht, in welchem Hydraulikflüssigkeit bei jeder Bewegung des Steuerkolbens transportiert werden muß.

2. Hydropneumatischer Kupplungskraftverstärker, insbesondere für Kraftfahrzeuge, mit in einem Gehäuse angeordneten hydraulischen und pneumatischen Arbeitskolben, welche auf einen gemeinsamen, die Kupplung betätigenden Stößel einzuwirken vermögen, wobei ein dem Kupplungskraftverstärker zugeordnetes Steuerventil einen mittels eines Geberzylinders hydraulisch ansteuerbaren Steuerkolben aufweist, der gegenüber einem pneumatischen Einlaß- und Auslaßventil für den pneumatischen Arbeitskolben des Kupplungskraftverstärkers wirkt, **gekennzeichnet** durch folgende Merkmale:
a) in der der Hydraulikseite des Steuerkolbens (17) zugewandten Seite eines das Steuerventil (3) begrenzenden Deckels (35) ist eine Bohrung (39) eingebracht;
b) auf der der Bohrung (39) zugewandten Hydraulikseite des Steuerkolbens (17) ist ein Zapfen (37) ausgebildet; und
c) die Abmessungen des Zapfens und der Bohrung sind so gehalten, daß der Zapfen (37) in jeder Betriebsstellung des Steuerkolbens (17) in die Bohrung (39) eintaucht, derart, daß zwischen Zapfen und Bohrung ein zueinander abgestimmtes Spiel besteht, in welchem Hydraulikflüssigkeit bei jeder Bewegung des Steuerkolbens transportiert werden muß.

3. Hydropneumatischer Kupplungskraftverstärker nach Anspruch 1 oder 2, dadurch **gekennzeichnet**, daß am Deckel (35) oder am Steuerkolben (17) ein geschlossener Ring ausgebildet ist, und daß am jeweils anderen Bauteil (Steuerkolben, Deckel) ein zur Aufnahme des geschlossenen Rings dienender Ringspalt vorgesehen ist.

## Claims

1. Hydropneumatic clutch servo, especially for motor vehicles, including hydraulic and pneumatic operating pistons disposed in a housing, which are suitable to act upon a common ram operating the clutch, wherein a distributor valve associated with the clutch servo includes a control piston for hydraulic control by an imparting cylinder, which control piston is operative opposite to a pneumatic inlet and outlet valve for the pneumatic operating piston of the clutch servo,
**characterized** by the following features:
(a) a pin (37) is formed on that side of a cover (35) defining said distributor valve (3), which faces the hydraulic side of said control piston;
(b) a bore (39) is machined into that side of said control piston (17) which faces said pin (37); and
(c) the dimensions of said pin and said bore are so designed that the pin (37) plunges into said bore (39) at any operative position of said control piston (17) in a way that there is a mutually matched clearance between said pin and said bore, in which the hydraulic fluid must be conveyed at any movement of said control piston.

2. Hydropneumatic clutch servo, especially for motor vehicles, including hydraulic and pneumatic operating pistons disposed in a housing, which are suitable to act upon a common ram operating the clutch, wherein a distributor valve associated with the clutch servo includes a control piston for hydraulic control by an imparting cylinder, which control piston is operative opposite to a pneumatic inlet and outlet valve for the pneumatic operating piston of the clutch servo,
**characterized** by the following features:
(a) a bore (39) is machined into that side of a cover (35) defining said distributor valve (3), which faces the hydraulic side of said control piston (17);
(b) a pin (37) is formed on the hydraulic side of said control piston (17), which faces said bore (39); and
(c) the dimensions of said pin and said bore are so designed that the pin (37) plunges into said bore (39) at any operative position of said control piston (17) in a way that there is a mutually matched clearance between said pin and said bore, in which the hydraulic fluid must be conveyed at any movement of said control piston.

3. Hydropneumatic clutch servo according to Claim 1 or 2, **characterized** in that a closed ring is formed on said cover (35) or on said control piston (17), and that an annular gap is provided on the respectively other element (control piston, cover) which serves to receive said closed ring.

## Revendications

1. Servomoteur hydropneumatique, notamment pour véhicules automobiles, qui comprend des pistons moteurs hydrauliques et pneumatiques disposés dans un carter, qui sont aptes à influer sur un poussoir commun qui commande l'embrayage, dans lequel une vanne-pilote affectée au servomoteur comprend un piston distributeur à être commandé, de façon hydraulique, par un maître-cylindre, ledit piston distributeur agissant en face d'une soupape pneumatique d'admission et d'émission pour le piston moteur pneumatique du servomoteur, **caractérisé** par les caractéristiques suivantes:
a) un tenon (37) est formé sur ce côté d'un couvercle (35) définissant ladite vanne-pilote (3), qui se trouve en face du côté hydraulique dudit piston distributeur;
b) un forage (39) est introduit dans ce côté dudit piston distributeur (17), qui se trouve en face dudit tenon (37); et
c) les dimensions dudit tenon et dudit forage sont conçues de façon que le tenon (37) plonge dans ledit forage (39) à toute position de service quelconque dudit piston distributeur (17), de façon qu'il y ait un jeu accordé mutuel entre ledit tenon et ledit forage, dans lequel on doit transporter le fluide hydraulique à chaque mouvement dudit piston distributeur.

2. Servomoteur hydropneumatique, notamment pour véhicules automobiles, qui comprend des pistons moteurs hydrauliques et pneumatiques disposés dans un carter, qui sont aptes à influer sur un poussoir commun qui commande l'embrayage, dans lequel une vanne-pilote affectée au servomoteur comprend un piston distributeur à être commandé, de façon hydraulique, par un maître-cylindre, ledit piston distributeur agissant en face d'une soupape pneumatique d'admission et d'émission pour le piston moteur pneumatique du servomoteur, **caractérisé** par les caractéristiques suivantes:
a) un forage (39) est introduit dans ce côté d'un couvercle (35) définissant ladite vanne-pilote (3), qui se trouve en face du côté hydraulique dudit piston distributeur (17);
b) un tenon (37) est formé sur le côté hydraulique dudit piston distributeur (17), qui se trouve en face dudit forage (39); et
c) les dimensions dudit tenon et dudit forage sont conçues de façon que le tenon (37) plonge dans ledit forage (39) à toute position de service quelconque dudit piston distributeur (17), de façon qu'il y ait un jeu accordé mutuel entre ledit tenon et ledit forage, dans lequel on doit transporter le fluide hydraulique à chaque mouvement dudit piston distributeur.

3. Servomoteur hydropneumatique selon la revendication 1 ou 2, **caractérisé** en ce qu'un anneau fermé est formé sur ledit couvercle (35) ou sur ledit piston distributeur (17), et en ce qu'un passage annulaire est formé sur le respectivement autre élément (piston distributeur, couvercle), qui sert à recevoir ledit anneau fermé.
